# EUROPÄISCHE PATENTSCHRIFT

(11) **EP 1 741 478 B1**
(45) Veröffentlichungstag und Bekanntmachung des Hinweises auf die Patenterteilung: **07.03.2012**
(21) Anmeldenummer: 06112826.0
(22) Anmeldetag: 20.04.2006
(51) Int. Cl.: B01D 29/21, B01D 35/30, B01D 46/24

(54) **Filterelement**
Filter element
Elément filtrant

(30) Priorität: 10.05.2005 DE 202005007637 U
(43) Veröffentlichungstag der Anmeldung: 10.01.2007
(73) Patentinhaber: MANN+HUMMEL GmbH, 71638 Ludwigsburg (DE)
(72) Erfinder: Straßenberger, Norbert, 84166 Adlkofen (DE); Wolf, Michael, 66539 Neunkirchen (DE); Croissant, Horst, 76879 Hochstadt (DE); Wagner, Udo, 84163 Marklkofen (DE)

(56) Entgegenhaltungen:
- EP-A- 1 199 093
- EP-A- 1 457 247
- DE-A- 19 712 679
- GB-A- 2 265 842

## Beschreibung

### Technisches Gebiet

Die Erfindung betrifft ein Filterelement nach dem Oberbegriff des Anspruchs 1.

### Stand der Technik

Aus der GB 542,339 ist ein Filterelement bekannt, welches aus mehreren Einzelelementen zusammengesetzt ist. Die Einzelelemente verfügen über je zwei Endscheiben und ein Filtermedium, wobei die Einzelelemente mit einem Verbindungsstück verbunden sind. Das Verbindungsstück ist als Rohrstück ausgebildet und verfügt über ein zylindrisches Mittelteil. Im Bereich der Stirnseiten ist das Verbindungsstück konisch ausgeführt, wobei sich der Konus zur Stirnseite hin verjüngt. Zum Verbinden der Einzelelemente wird das Verbindungsstück in die Endscheibe eingesteckt, wobei sich der Konus an den Endscheiben verhakt. Hierzu verfügt die Endscheibe über entsprechende Laschen. Damit zwischen den Einzelelementen kein ungereinigtes Fluid hindurch strömen kann, ist im Bereich des zylindrischen Mittelteils eine zusätzliche Dichtung angeordnet, welche axial zwischen den Einzelelementen verspannt wird. Nachteilig bei dieser Ausführung ist, dass die Einzelelemente stets mit einer axialen Vorspannung beaufschlagt werden müssen, um die Abdichtung zwischen den Einzelelementen sicher zu stellen. Weiterhin ist ein zusätzlicher Montage- und Kostenaufwand für die Dichtung erforderlich. EP-A-1 199 093 beschreibt ebenso ein Filterelement.

Aufgabe der Erfindung ist es, ein Filterelement zu schaffen, welches die oben genannten Nachteile zu vermeiden. Diese Aufgabe wird durch die Merkmale des Anspruches 1 gelöst.

### Offenbarung der Erfindung

Das Erfindungsgemäße Filterelement ist zur Reinigung eines flüssigen oder gasförmigen Fluids, insbesondere von Öl, vorgesehen. Das Filterelement weist mindestens zwei miteinander verbundene Einzelelemente auf. Durch das Verbinden von mehreren Einzelelementen können Filterelemente in beliebigen Längen hergestellt werden, wobei massenhaft hergestellte, preiswerte Standardelemente miteinander kombiniert werden. Dies reduziert die Anzahl an verschiedenen Filterelementgrößen. Durch das Verbinden der Einzelelemente zu einem langen Filterelement besitzt das Filterelement eine relativ große Stabilität. Jedes Einzelelement verfügt über zwei Endscheiben und ein zwischen den Endscheiben angeordnetes ringförmig geschlossenes Filtermedium. Das Filtermedium kann z.B. aus Zellulose-Papier, Glasfaservlies, Polyestervlies oder durch laminierte und / oder mehrschichtige Aufbauten ausgebildet sein, wobei auch Mischungen aus unterschiedlichen Fasermaterialien verwendet werden können. Das Filtermedium kann z.B. gewickelt oder zickzackförmig gefaltet und ringförmig geschlossen ausgeführt sein. Die Endscheiben sind mit dem Filtermedium dichtend verbunden. Vorzugsweise sind die Endscheiben als Kreisringscheibe ausgeführt. Bei vorteilhaften Ausgestaltungen besteht die Endscheibe aus einem flexiblen Material mit einer ausreichenden Formstabilität. Hierzu können Kunststoffe, wie z.B. Thermoplaste, oder Elastomere verwendet werden. Bei einer vorteilhaften Ausführung kann die Endscheibe aus einem thermisch reaktiven Kautschuk, insbesondere aus Nitril-Kautschuk bestehen. Die Einzelelemente sind mit einem Verbindungsstück verbunden, wobei das Verbindungsstück über zwei radiale umlaufende Dichtwulste verfügt. Das rohrförmig ausgebildete Verbindungsstück verfügt über einen, für das zu reinigende Fluid durchlässigen Innenbereich, wobei sowohl der Innenbereich, als auch der Außenbereich über eine beliebige Geometrie verfügen kann. Hierbei kann das Verbindungsstück über einen beliebigen z.B. rechteckigen, elliptischen, drei- oder vieleckigen Querschnitt verfügen. Die Dichtwulste können sowohl auf der Mantelfläche nach außen bzw. in dem Innenbereich nach innen gerichtet angeordnet sein. Bei einer Anordnung der Dichtwulste auf der Mantelfläche korrespondieren die Dichtwulste mit einer Öffnung in der Endscheibe. Bei einer Anordnung der Dichtwulste in dem Innenbereich korrespondierten die Dichtwulste mit der Außenfläche der Endscheibe. Die Dichtwulste korrespondierten dichtend mit der Endscheibe eines Einzelelementes, wodurch eine linienförmige oder flächige Berührung zwischen der Endscheibe und dem Verbindungsstück erzeugt wird. In diesem Bereich wird eine radial umlaufende verlaufende Dichtung erzeugt. Durch die Materialpaarung einer relativ elastischen Endscheibe mit einem relativ starren Verbindungsstück drückt sich der Dichtwulst in die Endscheibe ein, wodurch eine zuverlässige Abdichtung zwischen der Endscheibe und dem Verbindungsstück erzeugt ist.

Es ist vorteilhaft, wenn das Verbindungsstück einen Rastring, beispielsweise in Form eines Hinterschnitts, aufweist, welcher das Verbindungsstück in seiner Lage fixiert und ein Herausfallen beim Handling verhindert.

Gemäß einer weiteren Ausgestaltung der Erfindung ist das zylindrisch ausgeführte Verbindungsstück in die Endscheibe des Einzelelementes eingesteckt. Die Dichtwulste verfügen hierbei über einen Außendurchmesser (D) welcher größer ist, als der Innendurchmesser (d) der Endscheibe. Durch die Elastizität der Endscheibe wird der Innendurchmesser etwas geweitet, wodurch die Dichtwulste in den Innendurchmesser der Endscheibe eingeschoben werden können. Durch die Elastizität der Endscheibe liegt der Innendurchmesser der Endscheibe dichtend an den Dichtwulsten des Verbindungsstückes an.

Es ist vorteilhaft, wenn das Verbindungsstück über eine Zwischenscheibe verfügt, welche zwischen zwei Dichtwulsten angeordnet ist. Somit können die Endscheiben der Einzelelemente nicht über den Dichtwulst bzw. den für die Montage vorgesehenen Bereich hinausgeschoben werden. Bei dieser Ausführung werden die Einzelelemente auf das Verbindungsstück aufgeschoben, wobei die Zwischenscheibe als Anschlag für die jeweilige Endscheibe dient. Somit ist eine exakte Positionierung der Endscheibe auf dem Dichtwulst gewährleistet und kann auch im montierten Zustand nicht verrutschen.

Bei einer vorteilhaften Weiterbildung der Erfindung verfügt die Zwischenscheibe über einen Durchmesser, welcher im Wesentlichen dem Außendurchmesser der Endscheibe entspricht. Somit kann die Endscheibe jedes Einzelelementes vollflächig auf der Zwischenscheibe aufliegen und sich abstützen.

Gemäß einer Weiterbildung der Erfindung ist die Zwischenscheibe mit den angrenzenden Endscheiben unlösbar verbunden, insbesondere verklebt, wodurch ein fester Verbund zwischen den Verbindungspartnern (Endscheibe und Verbindungsstück) erzeugt ist. Somit ist ein unkontrolliertes Abgleiten der Einzelelemente von dem Verbindungsstück verhindert.

Bei einer vorteilhaften Ausgestaltung der Erfindung verfügt das Filterelement über Einzelelemente, welche an den Stirnseiten, welche dem Verbindungsstück gegenüberliegend angeordnet sind, über Einsteckstücke verfügen. Diese Einsteckstücke korrespondieren dichtend mit der Endscheibe. Hierbei können die Einsteckstücke als Verschluss oder Anschluss des Einzelelementes ausgebildet sein. Wie bereits bei der Ausgestaltung des Verbindungsstückes beschrieben, kann das Einsteckstück über einen zylindrisch ausgeführten Bereich verfügen, an welchem ein Dichtwulst angeordnet ist. Der Dichtwulst des Einsteckstückes kann über die gleichen Merkmale verfügen, wie das Verbindungsstück. Bei einer weiteren Ausgestaltung des Erfindungsgemäßen Filterelementes ist das Einsteckstück unlösbar mit der Endscheibe verbunden. Hierbei kann sich das Einsteckstück, auch durch ungünstige Druckverhältnisse in dem Filterelement, nicht unkontrolliert von der Endscheibe lösen.

### Kurze Beschreibung der Zeichnungen

Weitere Einzelheiten der Erfindung werden nachfolgend anhand der Figuren beschrieben. Hierbei zeigt
- Figur 1: ein Filterelement im Teilschnitt,
- Figur 2: einen Ausschnitt aus dem Filterelement gemäß Figur 1 und
- Figur 3: eine Ausschnittsvergrößerung aus dem Filterelement gemäß Figur 1.

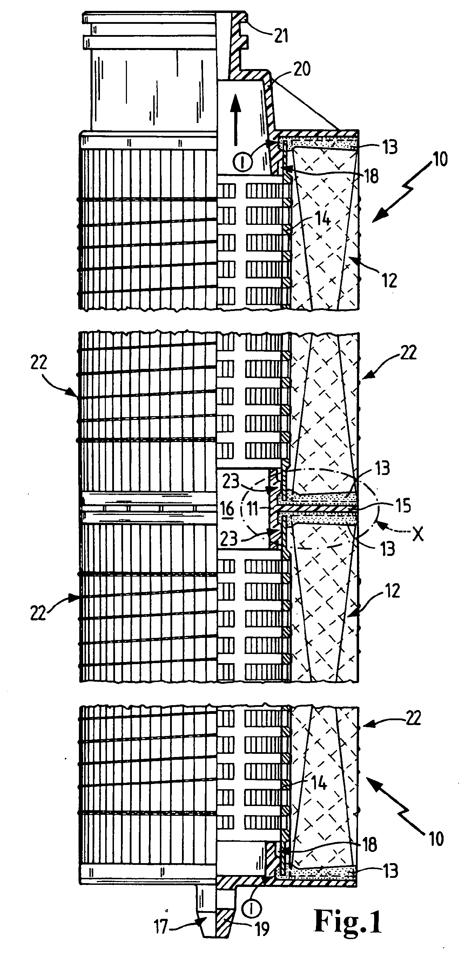

Das Filterelement gemäß Figur 1, welches vorzugsweise zur Reinigung von Flüssigkeiten wie z.B. Ölen verwendet wird, verfügt über zwei Einzelelemente 10, welche mit einem Verbindungsstück 11 verbunden sind. Die Einzelelemente 10 verfügen über ein zickzackförmig gefaltetes Filtermedium 12, welches ringförmig geschlossen ist. Das Filtermedium 12 ist von einer spiralförmig gewickelten Schnur 22 umgeben, welche mit einem Heiß-Kleber auf den Faltenspitzen des Filtermediums 12 fixiert ist. An den Stirnseiten des Filtermediums 12 sind Endscheiben 13 angeordnet, welche dichtend mit dem Filtermedium 12 verbunden sind. Die Endscheiben 13, welche als Kreisringscheibe ausgeführt sind, verfügen über eine Elastizität, welche ein Aufweiten des Innendurchmessers 1 ermöglichen. Innerhalb des ringförmig geschlossenen Filtermediums 12 ist ein Stützrohr 14 angeordnet, welches das Filtermedium 12 abstützt, wobei das Stützrohr für das zu reinigende bzw. gereinigte Fluid durchlässig ist. Das Stützrohr 14 ist ebenfalls dichtend mit der Endscheibe 13 verbunden. Bei dieser Ausführung besteht die Endscheibe 13 aus einem Nitril-Kautschuk, wobei das Filtermedium 12 und das Stützrohr 14 stirnseitig von dem Material der Endscheibe 13 umschlossen sind. Die Einzelelemente 10 sind mit dem Verbindungsstück 11 verbunden, wobei dieses in den Innendurchmesser der Endscheiben 13 eingesteckt ist. Das Verbindungsstück 11 verfügt über eine Zwischenscheibe 15, welche über den gleichen Außendurchmesser wie die Endscheiben 13 verfügt. Weiterhin verfügt das Verbindungsstück 11 über einen rohrförmigen Abschnitt, welcher einen fluiddurchlässigen Innenbereich 16 verfügt. Bei dieser Ausführung ist der Innenbereich 16 als Hohlraum ausgeführt. Bei anderen, nicht dargestellten Ausführungen kann der Innenbereich 16 über Streben oder Strukturen verfügen, welche die Stabilität erhöhen. Weiterhin kann in dem Innenbereich 16 eine Füllung (nicht dargestellt) angeordnet sein, welche für das Fluid durchlässig ist und als zusätzliche Filtereinheit dienen kann.

An der einen Endscheibe 13 des Einzelelementes 10, welche nicht mit dem Verbindungsstück 11 verbunden ist, ist ein Verschlussstück 17 angeordnet, welche die Stirnseite des Einzelelementes 10 verschließt. Das Verschlussstück 17 besteht aus einem, vorzugsweise thermoplastischen, Kunststoff, wobei das Verschlussstück 17 einerseits über einen Einsteckdurchmesser 18 verfügt, welcher in den Innendurchmesser I der Endscheibe 13 eingesteckt ist. Auf der anderen Seite des Verschlussstückes 17 ist eine Zentriervorrichtung 19 angeordnet, welche in einem Gehäuse (nicht dargestellt) positioniert und gesichert werden kann. Das Verschlussstück 17 ist unlösbar mit der Endscheibe 13 verklebt, so dass ein unkontrolliertes Lösen des Verschlussstückes 17 verhindert wird.

Das andere Einzelelement 10 verfügt über ein Anschlussstück 20, welches mit der Endscheibe 13 unlösbar verbunden ist. Hierzu ist das Anschlussstück 20 mit seinem Einsteckdurchmesser 18 in den Innendurchmesser l der Endscheibe 13 eingesteckt und mit dieser verklebt. Das Anschlussstück 20 verfügt über einen Stutzen 21, welcher an eine Reinfluidleitung (nicht dargestellt) anschließbar ist.

Das zu reinigende Fluid durchströmt die Einzelelemente 10 des Filterelements von außen nach innen. Hierbei fixiert die Schnur 22 die Falten des Filtermediums 12, damit diese sich nicht aneinander anlegen. Das gereinigte Fluid befindet sich in dem, von dem Filtermedium 12 umschlossenen Ringraum. Das durch das untere Einzelelement 10 gereinigte Fluid strömt durch den Innenbereich 16 des Verbindungsstückes 11 in den Ringraum des oberen Einzelelementes 10. Von diesem oberen Ringraum strömt das Fluid durch das Anschlussstück 20 und den Stutzen 21 aus dem Filterelement hinaus.

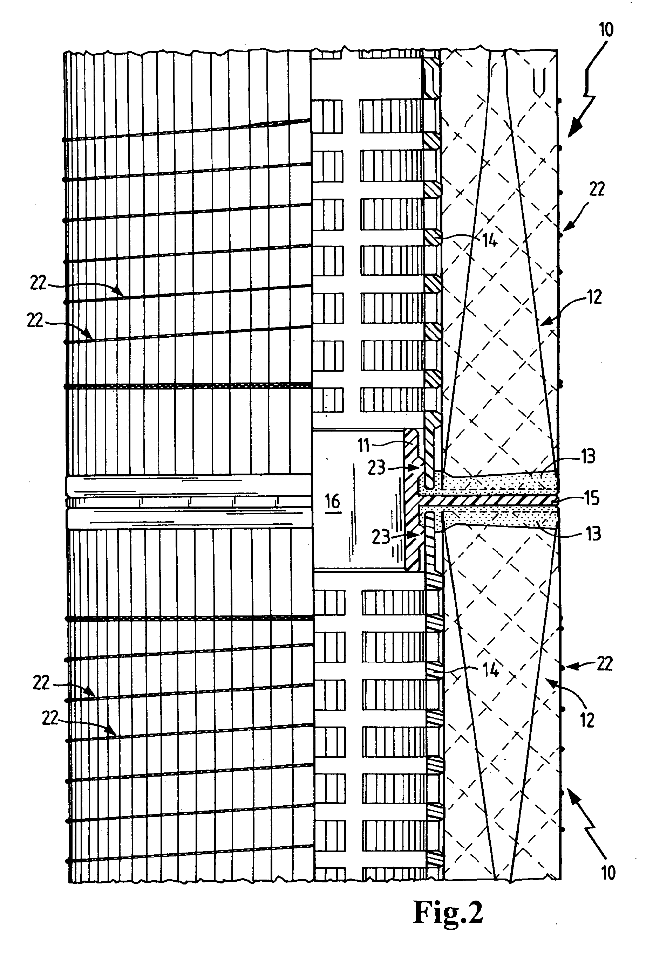

In Figur 2 ist ein Ausschnitt aus Figur 1 im Teilschnitt dargestellt, wobei dieser Ausschnitt den Bereich um das Verbindungsstück 11 zeigt. Der Figur 1 entsprechende Bauteile sind mit gleichen Bezugszeichen versehen. Das Verbindungsstück 11 verfügt über zwei Dichtwulste 23, welche beidseitig der Zwischenscheibe 15 angeordnet sind. Der Dichtwulst 23 korrespondiert dichtend mit der Endscheibe 13, welche auf das Verbindungsstück 11 gesteckt ist. Durch die Elastizität der Endscheibe 13 weitet sich diese bei der Montage etwas, so dass der Dichtwulst 23 dichtend an der Endscheibe 13 anliegt. Die Zwischenscheibe 15 ist jeweils vollflächig mit den äußeren Stirnseiten der Endscheiben 13 verklebt, so dass sich das Verbindungsstück 11 nicht von dem Einzelelement 10 lösen kann.

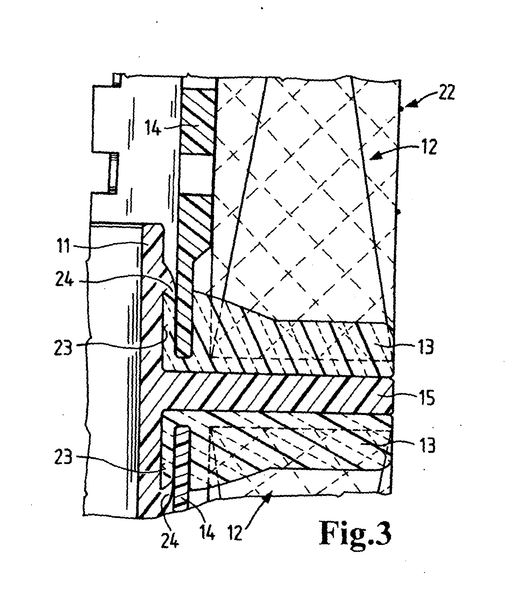

In Figur 3 ist eine Ausschnittsvergrößerung X aus Figur 1 im Teilschnitt dargestellt, wobei dieser Ausschnitt den Bereich um das Verbindungsstück 11 zeigt. Der Figur 1 entsprechende Bauteile sind mit den gleichen Bezugszeichen versehen. Das Verbindungsstück 11 weist hierbei zusätzlich einen Rastring 24 in Form eines Hinterschnitts im Material des Verbindungsstücks 11 auf, wobei dieser Rastring 24 beim Zusammenstecken mit dem Einzelelement 10 eine Verkrallung mit der Endscheibe 13 bewirkt. Dadurch wird das Verbindungsstück 11 in seiner Lage zu den Einzelelementen 10 fixiert und es wird ein Herausfallen des Verbindungsstücks 11 beim Handling der Filterelemente verhindert. Bei unsachgemäßer Behandlung der Filterelemente oder beim gewaltsamen Trennen von Verbindungsstück 11 und Einzelelement 10 kann es hierbei zu einer Zerstörung der Endscheibe 13 kommen. Dieses beinhaltet einen zusätzlichen Sicherheitsaspekt, da hierdurch ein wiederholtes Verwenden von gebrauchten Einzelelementen so gut wie ausgeschlossen wird. Des Weiteren erweist es sich hier als vorteilhaft, dass beim Zusammenstecken der Einzelelemente mit dem Verbindungsstück sich die Teile nicht mehr voneinander lösen und sich dadurch eine erhöhte Handlingsicherheit ergibt.

## Patentansprüche

1. Filterelement zur Reinigung eines Fluids, insbesondere von Öl, aufweisend mindestens zwei Einzelelemente (10), welche mittels einem Verbindungsstück (11) verbunden sind, wobei die Einzelelemente (10) über jeweils zwei Endscheiben (13) und ein zwischen den Endscheiben angeordnetes Filtermedium (12) verfügen, **dadurch gekennzeichnet, dass** das Verbindungsstück (11) über zwei radial umlaufende Dichtwulste (23) verfügt, welche mit der jeweiligen Endscheibe (13) eines Einzelelementes (10) dichtend korrespondiert.

2. Filterelement nach Anspruch 1, **dadurch gekennzeichnet, dass** das Verbindungsstück (11) in die Endscheibe (13) des Einzelelementes (10) eingesteckt ist, wobei der Dichtwulst (23) über einen Außendurchmesser (D) verfügt, welcher größer ist, als der Innendurchmesser (d) der Endscheibe.

3. Filterelement nach einem der vorangehenden Ansprüche, **dadurch gekennzeichnet, dass** ein Rastring (24) vorgesehen ist, welcher das Verbindungsstück (11) in seiner Lage fixiert.

4. Filterelement nach einem der vorangehenden Ansprüche, **dadurch gekennzeichnet, dass** das Verbindungsstück (11) über eine Zwischenscheibe (15) verfügt, welche zwischen zwei Dichtwulsten (23) angeordnet ist.

5. Filterelement nach Anspruch 4, **dadurch gekennzeichnet, dass** die Zwischenscheibe (15) über einen Durchmesser verfügt, welcher im Wesentlichen dem Außendurchmesser der Endscheibe (13) entspricht.

6. Filterelement nach einem der Ansprüche 4 oder 5, **dadurch gekennzeichnet, dass** die Zwischenscheibe (15) mit den angrenzenden Endscheiben (13) unlösbar verbunden, insbesondere verklebt, ist.

7. Filterelement nach einem der vorangehenden Ansprüche, **dadurch gekennzeichnet, dass** die Einzelelemente (10) an den Stirnseiten, welche dem Verbindungsstück gegenüberliegend angeordnet sind, über Einsteckstücke (20, 17) verfügen, welche dichtend mit der Endscheibe (13) korrespondieren.

8. Filterelement nach Anspruch 7, **dadurch gekennzeichnet, dass** das Einsteckstück (20, 17) über einen zylindrisch ausgeführten Bereich verfügen, an welchem ein Dichtwulst (23) angeordnet ist.

9. Filterelement nach Anspruch 7 oder 8, **dadurch gekennzeichnet, dass** das Einsteckstück (20, 17) mit der Endscheibe (13) unlösbar verbunden ist.

## Claims

1. Filter element for cleaning a fluid, in particular oil, featuring at least two individual elements (10) which are connected by means of a connecting piece, the individual elements (10) having two end plates (13) each and a filter medium disposed between the end plates, **characterized in that** the connecting piece (11) has two radially circumferential sealing beads (23) which correspond sealingly with the respective end plate (13) of an individual element (10).

2. Filter element according to claim 1, **characterized in that** the connecting piece (11) is inserted into the end plate (13) of the individual element (10), the sealing bead (23) featuring an external diameter (D) which is larger than the internal diameter (d) of the end plate.

3. Filter element according to one of the above claims, **characterized in that** a locking ring (24) is provided which locks the connecting piece (11) in its position.

4. Filter element according to one of the above claims, **characterized in that** the connecting piece (11) has an intermediate disk (15) which is disposed between two sealing beads (23).

5. Filter element according to claim 4, **characterized in that** the intermediate disk (15) has a diameter which corresponds substantially to the external diameter of the end plate (13).

6. Filter element according to one of the claims 4 or 5, **characterized in that** the intermediate disk (15) is connected undetachably, in particular glued, with the adjacent end plates (13).

7. Filter element according to one of the above claims, **characterized in that** the individual elements (10) have insertion pieces (20, 17), which correspond sealingly with the end plate (13), at the end faces, which are disposed opposite to the connecting piece.

8. Filter element according to claim 7, **characterized in that** the insertion piece (20, 17) has a cylindrically designed area where a sealing bead (23) is disposed.

9. Filter element according to claim 7 or 8, **characterized in that** the insertion piece (20, 17) is connected undetachably with the end plate (13).

## Revendications

1. Élément filtrant destiné au nettoyage d'un fluide, notamment d'huile, présentant au moins deux éléments individuels (10) qui sont reliés par une pièce de raccord (11), les éléments individuels (10) étant pourvus de respectivement deux disques d'extrémité (13) et d'un milieu filtrant (12) placé entre les disques d'extrémité (13), **caractérisé en ce que** la pièce de raccord (11) comporte deux bourrelets d'étanchéité (23) radiaux qui sont reliés de manière étanche au disque d'extrémité (13) respectif d'un élément individuel (10).

2. Élément filtrant selon la revendication 1, **caractérisé en ce que** la pièce de raccord (11) est enfichée dans le disque d'extrémité (13) de l'élément individuel (10), le bourrelet d'étanchéité (23) ayant un diamètre extérieur (D) supérieur au diamètre intérieur (d) du disque d'extrémité.

3. Élément filtrant selon l'une des revendications précédentes, **caractérisé en ce qu'**une bague encliquetée (24) fixant la pièce de raccord (11) dans sa position est prévue.

4. Élément filtrant selon l'une des revendications précédentes, **caractérisé en ce que** la pièce de raccord (11) est pourvue d'un disque intermédiaire (15) qui est disposé entre deux bourrelets d'étanchéité (23).

5. Élément filtrant selon la revendication 4, **caractérisé en ce que** le disque intermédiaire (15) a un diamètre qui correspond essentiellement au diamètre extérieur du disque d'extrémité (13).

6. Élément filtrant selon l'une des revendications 4 ou 5, **caractérisé en ce que** le disque intermédiaire (15) est relié de manière fixe, notamment collé, aux disques d'extrémité (13) contigus.

7. Élément filtrant selon l'une des revendications précédentes, **caractérisé en ce que** les faces frontales des éléments individuels situées du côté opposé à la pièce de raccord sont dotées de pièces enfichables (20, 17) qui sont reliées de manière étanche avec le disque d'extrémité (13).

8. Élément filtrant selon la revendication 7, **caractérisé en ce que** la pièce enfichable (20, 17) comporte une zone cylindrique sur laquelle est disposé un bourrelet d'étanchéité (23).

9. Élément filtrant selon la revendication 7, **caractérisé en ce que** la pièce enfichable (20, 17) est connectée avec le disque d'extrémité (13) de manière fixe.
